# EUROPÄISCHE PATENTSCHRIFT

(11) **EP 0 601 279 B1**
(45) Veröffentlichungstag und Bekanntmachung des Hinweises auf die Patenterteilung: **05.11.1997**
(21) Anmeldenummer: 93113291.4
(22) Anmeldetag: 19.08.1993
(51) Int. Cl.: B65G 15/64

(54) **Zahn-und Keilriemeneinrichtung für Laufbänder**
Toothed belt and V-belt apparatus for conveyors
Courroie crantée et courroie trapézoidale pour tapis roulant

(30) Priorität: 12.11.1992 DE 4238252
(43) Veröffentlichungstag der Anmeldung: 15.06.1994
(73) Patentinhaber: WOODWAY AG, CH-2100 Neuchatel (CH)
(72) Erfinder: Schönenberger, Willi, CH-8824 Schönenberg (CH)
(74) Vertreter: Grünecker, Kinkeldey, Stockmair & Schwanhäusser Anwaltssozietät

(56) Entgegenhaltungen:
- EP-A- 0 364 992
- DE-A- 1 650 657
- DE-A- 2 609 043
- DE-A- 3 933 847
- FR-A- 718 485
- GB-A- 885 427

## Beschreibung

Die Erfindung betrifft eine Zahn- und Keilriemeneinrichtung für Laufbänder, umfassend wenigstens einen eine Vielzahl von Trittlamellen aufweisenden endlosen Riemen, welcher um zwei hintereinander angeordnete Umlenkrollen geführt ist.

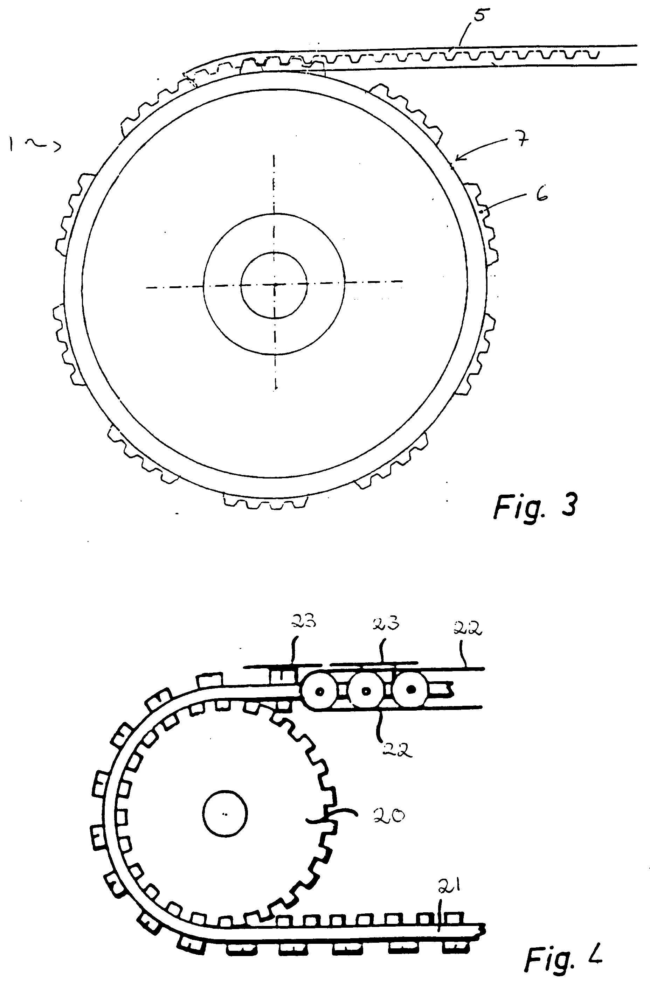

Aus der DE-A-25 03 118 ist bereits eine Zahnriemen- und Keilriemeneinrichtung bekannt, bei welcher ein Trittlamellen aufweisender Zahnriemen um je zwei Umlenkrollen geführt ist und zwei Keilriemen um eine Mehrzahl von Stützrollen laufen. Eine solche bekannte Einrichtung ist in Fig. 4 dargestellt. Während die Antriebskraft eines mit einer der Umlenkrollen verbundenen Motors von einer Umlenkrolle 20 auf die andere über den Zahnriemen 21 übertragen wird, wird der Keilriemen 22 nur passiv, d.h. ohne eine Kraft zu übertragen, um die Umlenkung mitgenommen und dient allein der zusätzlichen Abstützung der Trittlamellen 23. Der Zahnriemen sowie der Keilriemen sind also voneinander getrennt angeordnete Einrichtungen mit unterschiedlichen Funktionen.

Diese bekannte Einrichtung ist vor allem aufgrund der zwei voneinander getrennten Riemeneinrichtungen aufwendig und kostenintensiv in der Herstellung und erfordert zeitaufwendige Wartungen. Ferner erzeugt die Kraftübertragung durch Zahnriemen und Umlenkrollen ein unangenehmes lautes Geräusch, das als sehr störend empfunden wird.

Der Erfindung liegt die Aufgabe zugrunde, die bei der bekannten Zahnriemen- und Keilriemeneinrichtung auftretenden Nachteile zu überwinden und insbesondere so zu verbessern, daß sie möglichst ruhig läuft.

Diese Aufgabe wird erfindungsgemäß dadurch gelöst, daß wenigstens eine der Umlenkrollen nebeneinander angeordnet einen Gleitscheibenabschnitt und einen Zahnscheibenabschnitt aufweist, und daß der Riemen nebeneinander angeordnet einen dem Zahnabschnitt der Umlenkrolle zugeordneten Zahnriemenbereich und einen in Anlage mit dem Gleitscheibenabschnitt der Umlenkrolle befindlichen Keilriemenbereich aufweist, wobei die Hauptkraft zum Antrieb des Riemens über den Gleitscheibenabschnitt und den Keilriemenbereich übertragbar ist.

Die vorliegende Erfindung stellt darauf ab, die Hauptkraft zum Antrieb des Riemens und der Umlenkrolle über den geräuscharmen Keilriemen zu übertragen und nicht mehr wie bisher über den Zahnriemen. Die Aufgabe des Zahnriemens ist es, sicherzustellen, daß das Laufband nicht verkantet oder seitlich abläuft. Bei der erfindungsgemäßen Zahnriemen-Keilriemeneinrichtung wird nur noch ein einzelner Riemen verwendet, welcher kombiniert Zahn- und Keilriemenbereiche aufweist. Durch die Dimensionierung der einzelnen Bereiche kann direkt die Geräuschentwicklung beeinflußt werden, d.h., je kleiner der Zahnriemenbereich gewählt wird, desto geringer wird die Geräuschbelastung sein.

Die erfindungsgemäße Einrichtung ist kostengünstig und zeitsparend in der Herstellung, da der notwendige Material und Arbeitsaufwand erheblich gesenkt wird. Des weiteren können die Einzelteile der erfindungsgemäßen Einrichtung leicht ersetzt bzw. gewartet werden, so daß die Ausfallzeiten eines Laufbandes bei einer durchzuführenden Wartung minimiert werden.

Damit der Riemen nicht verkantet oder seitlich abläuft, ist es ausreichend, wenn nur eine der Umlenkrollen Zahnscheiben- und Gleitscheibenabschnitte aufweist und die andere Umlenkrolle von einer Gleitscheibe gebildet ist, wobei die mit Zahnscheiben- und Gleitscheibenabschnitt versehene Umlenkrolle durch einen Motor antreibbar ist.

Diese Ausführungsform ist besonders geräuscharm und reduziert die Material- und Herstellungskosten drastisch.

Gemäß einer anderen bevorzugten Ausführungsform der Erfindung kann vorgesehen sein, daß der Zahnscheibenabschnitt der Umlenkrolle über seine Umfangsfläche abwechselnd in gleichen Abständen angeordnete Verzahnungsbereiche und zahnfreie Bereiche aufweist, wobei die Verzahnungsbereiche von einer Vielzahl von Zähnen gebildet sind.

Durch diese Ausführungsform wird eine weitere Verminderung der entstehenden Geräusche gewährleistet, da nicht mehr jeder einzelne Zahn des Zahnriemens mit einem komplementären Zahnpaar auf dem Zahnscheibenabschnitt in Eingriff steht.

Gemäß einer weiteren bevorzugten Ausführungsform der Erfindung kann vorgesehen sein, daß die Länge eines zahnfreien Bereiches des Zahnscheibenabschnittes in Umfangsrichtung der Umlenkrolle der Hälfte der Länge eines Verzahnungsbereiches in Umfangsrichtung der Umlenkrolle entspricht.

Dabei hat es sich als vorteilhaft herausgestellt, daß ein Verzahnungsbereich in Umfangsrichtung vier nebeneinander angeordnete einzelne Zähne aufweist und daß der zahnfreie Bereich der Länge zweier nebeneinander angeordneten Zähne entspricht.

Durch diese Abmessungen der Verzahnungsbereiche und der zahnfreien Bereiche können die entstehenden Geräusche um ca. die Hälfte reduziert werden, da nur noch die Hälfte der an dem Zahnriemen befindlichen einzelne Zähne ein komplementäres Zahnpaar auf dem Zahnscheibenabschnitt vorfinden. Die auf dem Zahnscheibenabschnitt noch vorhandenen Verzahnungsbereiche gewährleisten, daß der Riemen nicht verkantet oder seitlich abläuft.

Eine weitere Auführungsform besteht darin, die einander zugeordnete Verzahnung des Zahnriemenbereiches und des Zahnscheibenabschnitts so zu dimensionieren, daß im Betrieb nur eine Flanke jedes Zahnes mit einer Flanke des zugeordneten Zahnes in Eingriff ist.

Da die Hauptkraft der erfindungsgemäßen Einrichtung über den Keilriemenbereich übertragen wird, ist es ausreichend, wenn nur noch die Flanken der einander zugeordneten Zähne miteinander in Kontakt sind, um zu gewährleisten, daß das Laufband nicht verkantet oder seitlich abläuft. Diese Ausführungsform dient vor allem auch der Verminderung der Geräuschentwicklung, da die Geräusche insbesondere durch die miteinander in Kontakt stehenden Bereiche der Zähne erzeugt werden.

Schließlich hat es sich als zweckmäßig herausgestellt, daß in der Oberfläche des Zahnscheibenabschnitts eine Umfangsnut ausgebildet ist, in welcher die Zähne des Zahnscheibenabschnitts außer Anlage mit dem Zahnriemenbereich sind.

Auch diese Ausführungsform dient der weiteren Verringerung der Geräuschentwicklung, durch die Reduzierung des mit Verzahnung versehenen Zahnscheibenabschnittes. Durch die Ausbildung zweier parallel nebeneinander angeordneten, durch eine Umlaufnut getrennten Zahnscheibenabschnitte wird gleichzeitig gewährleistet, daß der Riemen gleichmäßig über die Umlenkrollen läuft.

Die Erfindung wird im folgenden anhand von Ausführungsbeispielen und unter Bezug auf die Zeichnung näher erläutert. Es zeigen:
- Fig.1: eine Aufsicht auf eine Welle mit zwei daran befestigten Umlenkrollen,
- Fig.2: einen Ausschnitt einer der in Fig. 1 dargestellten Umlenkrollen,
- Fig.3: eine Seitenansicht einer Umlenkrolle mit Zahn-Keilriemen gemäß einer Ausführungsform der Erfindung und
- Fig.4: eine Seitenansicht einer Umlenkrolle mit Riemen und Stützrollen gemäß des Standes der Technik.

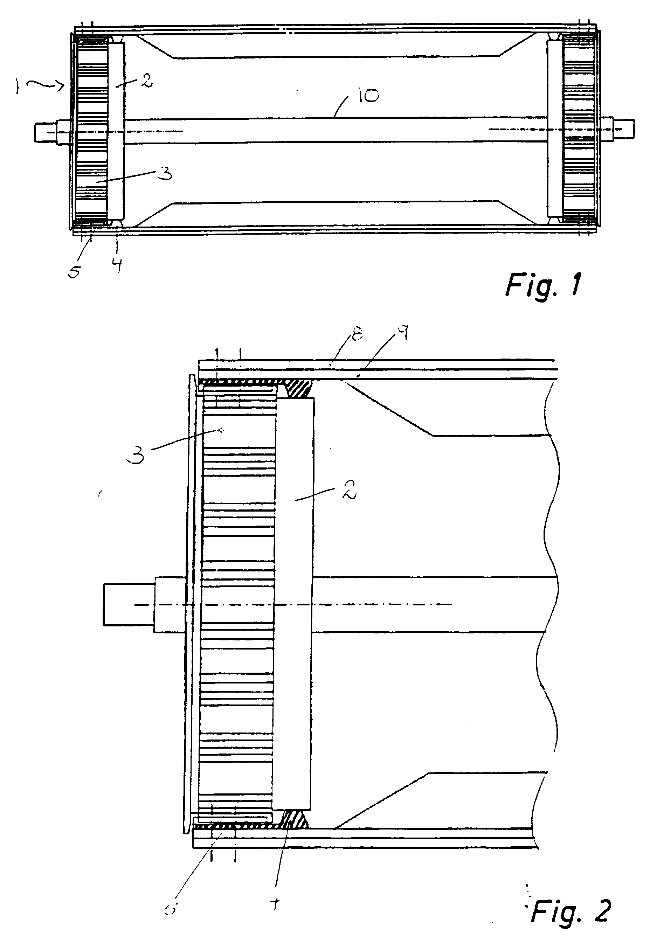

Die in Fig. 1 dargestellte Umlenkrollenwelle 10 weist an ihren zwei äußeren Enden jeweils eine Umlenkrolle 1 auf. Jede dieser Umlenkrollen 1 wird durch einen Zahnscheibenabschnitt 3 und einen in Anlage neben dem Zahnscheibenabschnitt angeordneten Gleitscheibenabschnitt 2 gebildet und so auf die Welle aufgesetzt, daß der Zahnscheibenabschnitt 3 jeder Umlenkrolle neben den äußeren Enden der Welle liegen. Die Kreisflächen der Gleitscheibenabschnitte 2 der über die Welle 10 miteinander verbundenen Umlenkrollen 1 liegen sich also parallel gegenüber.

Der Zahnscheibenabschnitt 3 ist an seiner Umfangsfläche mit nebeneinander angeordneten Zähnen versehen; dabei erstreckt sich jeder einzelne Zahn über die Breite der Umfangsfläche. Die Verzahnung wird vorzugsweise als Evolventenverzahnung ausgebildet. Die Umfangsfläche der Gleitscheibe ist glatt ausgebildet, wobei der Durchmesser der Gleitscheibe vorzugsweise etwas geringer ist als der Fußkreisdurchmesser des Zahnscheibenabschnitts 3, d.h. der durch die Bereiche zwischen den Zahnstümpfen gebildete Durchmesser.

Um jede der Umlenkrollenumfangsflächen ist ein endloser Riemen geschlungen, der an seiner Innenseite nebeneinander angeordnet einen mit Zähnen versehenen Zahnriemenbereich 5 und einen Keilriemenbereich 4 aufweist. Die Abmessung und die Anordnung der Zahn- und Keilriemenbereiche ist entsprechend der Abmessungen und der Anordnung der Zahnscheiben- bzw. Gleitscheibenabschnitte gewählt. Das heißt, der dem Zahnscheibenabschnitt 3 zugeordnete Zahnriemenbereich 5 liegt an dem äußeren Ende der Umlenkrolle an und weist die gleiche Breite wie der Zahnscheibenabschnitt 3 auf. Entsprechend liegt der Keilriemenbereich 4 auf dem Gleitscheibenabschnitt 2 und entspricht in seiner Größe in etwa dem Gleitscheibenabschnitt 2.

Der Zahnscheibenabschnitt 3 wird vorzugsweise, wie in Fig. 3 dargestellt, ausgebildet, d.h., es wird nicht die ganze Umfangsfläche des Zahnscheibenabschnittes mit einer Verzahnung versehen, sondern es sind Verzahnungsbereiche 6 und zahnfreie Bereiche 7 ausgebildet, welche in gleichen Abständen abwechselnd über die Umfangsfläche angeordnet sind. Die zahnfreien Bereiche 7 sind vorzugsweise tiefer ausgebildet als der Fußkreisdurchmesser der Verzahnung, um so einen Kontakt zwischen der Verzahnung des Zahnriemenbereiches und damit verbundene Abnutzung etc. auszuschließen. Es hat sich herausgestellt, daß die Hauptursache der Geräuschentwicklung beim Betrieb dieser Umlenkrollen das Ineinandergreifen der Verzahnung des Zahnriemens und des Zahnscheibenabschnittes sind. Durch die Ausbildung zahnfreier Bereiche wird die Eingriffsfläche des mit durchgehender Zahnung versehenen Zahnriemens erheblich reduziert.

Im Betrieb sind zwei dieser mit Umlenkrollen versehenen Wellen parallel zueinander angeordnet, wobei vorzugsweise nur eine erfindungsgemäß ausgestaltete Umlenkrolle, beispielsweise an der Welle 10 eingesetzt wird, während die andere Welle an ihren äußeren Enden lediglich Gleitscheiben als Umlenkrollen aufweist. In diesem Falle läuft jeder Riemen über mindestens eine erfindungsgemäß ausgestaltete Umlenkrolle, wobei die eine Umlenkrolle beispielsweise vorn und die andere Umlenkrolle hinten angeordnet ist. Ein endloser Zahn-Keilriemen wird über jedes dieser Umlenkrollenpaare geführt. Die mit einer erfindungsgemäß ausgestalteten Umlenkrolle 1 versehene Welle 10 wird durch einen in der Zeichnung nicht dargestellten Motor oder durch ein sonstiges Antriebsorgan angetrieben. Die auf die Umlenkrollenwelle 10 übertragene Antriebskraft wird über den Gleitscheibenabschnitt 2 und den unter Spannung auf dem Gleitscheibenabschnitt 2 anliegenden Keilriemenbereich 4 auf die zweite Umlenkrolle übertragen, die Aufgabe des Zahnriemenbereiches 5 ist es dabei, eine Verkantung oder ein seitliches Ablaufen des Riemens zu verhindern. Gleichzeitig werden auf den Umlenkrollen, vorzugsweise in dem Bereich der Zahnscheibenabschnitte 3 befestigte Trittlamellen 9 mit den Riemen in Bewegung gesetzt, so daß eine auf diesen Trittlamellen stehende Person entweder eine Geh- oder Laufbewegung ausführen muß, um am Ort zu bleiben, oder von einem Ort an einen anderen befördert wird. Vorzugsweise wird die Oberseite der Trittlamellen mit einem stoßmindernden Belag, beispielsweise einer Gummischicht 8 versehen, welche den Auftritt dämpft und eine angenehme Trittberührung ergibt.

Die erfindungsgemäße Keilriemen-Zahnriemeneinrichtung zeichnet sich durch einen besonders geräuscharmen Betrieb sowie durch ein besonders ruhig und gleichmäßig laufendes Laufband aus. Gemäß einer weiteren nicht dargestellten Ausführungsform kann die mit Verzahnung versehene Fläche des Zahnscheibenabschnittes noch weiter verringert werden, wenn eine Umfangsnut mittig in dem Zahnscheibenabschnitt 3 ausgebildet ist. Der Zahnscheibenabschnitt wird dann von zwei parallelen, mit Verzahnung bzw. Verzahnungsbereichen und zahnfreien Bereichen versehenen Umfangsbereichen gebildet, welche durch eine zahnfreie Umfangsnut getrennt werden, wobei sich einer der Umfangsbereiche an den äußeren Rand des Zahnscheibenabschnittes anschließt und der andere Bereich an den Gleitscheibenabschnitt angrenzt. Die Umfangsnut kann eine Ebene mit den zahnfreien Bereichen bilden oder tiefer ausgebildet sein.

Diese Umfangsnut kann zum Beispiel die Befestigungen der an dem Zahnriemenbereich angebrachten Trittlamellen aufnehmen.

Gemäß einer weiteren in Fig. 2 dargestellten bevorzugten Ausführungsform werden die Verzahnungen des Zahnriemenbereiches 5 und des Zahnscheibenabschnittes 3 so dimensioniert, daß die einander zugeordnete Verzahnung des Zahnriemenbereiches 5 und des Zahnscheibenabschnittes 3 im Betrieb nur in dem Bereich einer Flanke der zugeordneten Verzahnung in Eingriff stehen. Zwischen den übrigen Flächen der einander zugeordneten Verzahnungen ist ein Luftspalt von vorzugsweise 0,5 mm ausgebildet. Diese Dimensionierung kann durchgeführt werden, da die Hauptkraft über den Keilriemenbereich und den Gleitscheibenabschnitt übertragen wird und der Zahnscheibenabschnitt sowie der Zahnriemenbereich nur sicherstellt, daß das Laufband nicht verkantet oder seitlich abläuft. Auf diese Weise werden die durch die im Eingriff stehende Verzahnung entstehenden Geräusche drastisch reduziert.

Der erfindungsgemäße Riemen wird aus herkömmlichen Materialien, vorzugsweise mit in Umfangsrichtung eingebetteten Stahllitzen hergestellt. Dabei kann der Riemen entweder einteilig oder zweiteilig hergestellt werden, wobei die beiden Teile dann anschließend miteinander verbunden werden müssen.

Der Zahnscheiben- und Gleitscheibenabschnitt kann einstückig oder als zwei getrennt voneinander gefertigte und in einen weiteren Arbeitsschritt miteinander verbundene Teile gefertigt werden. Die Ausfertigung des Zahnscheiben- und Gleitscheibenabschnittes als zwei getrennte Werkstücke ermöglicht es, später bei Abnutzung nur eines der Teile auszuwechseln, oder die Dimensionierung der Einzelteile später zu verändern.

## Patentansprüche

1. Zahn- und Keilriemeneinrichtung für Laufbänder, umfassend wenigstens einen eine Vielzahl von Trittlamellen (9) aufweisenden endlosen Riemen, welcher um zwei hintereinander angeordnete Umlenkrollen (10) geführt ist,
dadurch **gekennzeichnet,**
daß wenigstens eine der Umlenkrollen (10) nebeneinander angeordnet einen Gleitscheibenabschnitt (2) und einen Zahnscheibenabschnitt (3) aufweist und daß der Riemen nebeneinander angeordnet einen dem Zahnscheibenabschnitt (3) der Umlenkrolle zugeordneten Zahnriemenbereich (5) und einen in Anlage mit dem Gleitscheibenabschnitt (2) der Umlenkrolle befindlichen Keilriemenbereich (4) aufweist, wobei die Hauptkraft zum Antrieb des Riemens über den Gleitscheibenabschnitt (2) und den Keilriemenbereich (4) übertragbar ist.

2. Zahn- und Keilriemeneinrichtung nach Anspruch 1, dadurch gekennzeichnet, daß die eine Umlenkrolle den Gleitscheibenabschnitt (2) und den Zahnscheibenabschnitt (3) aufweist und daß die andere Umlenkrolle von einer Gleitscheibe gebildet ist, wobei die mit Gleitscheiben- und Zahnscheibenabschnitt versehene Umlenkrolle von einer Antriebsvorrichtung antreibbar ist.

3. Zahn- und Keilriemeneinrichtung nach Anspruch 1 oder 2, dadurch gekennzeichnet, daß der Zahnscheibenabschnitt (3) der Umlenkrolle über seine Umfangsfläche abwechselnd in gleichen Abständen angeordnete Verzahnungsbereiche (6) und zahnfreie Bereiche (7) aufweist, wobei die Verzahnungsbereiche von einer Vielzahl von Zähnen gebildet sind.

4. Zahn- und Keilriemeneinrichtung nach Anspruch 2, dadurch gekennzeichnet, daß die Länge eines zahnfreien Bereiches (7) des Zahnscheibenabschnittes (3) in Umfangsrichtung der Umlenkrolle der Hälfte der Länge des Verzahnungsbereiches (6) in Umfangsrichtung der Umlenkrolle entspricht.

5. Zahn- und Keilriemeneinrichtung nach Anspruch 2 oder 3, dadurch gekennzeichnet, daß ein Verzahnungsbereich (6) in Umfangsrichtung vier nebeneinander angeordnete Zähne aufweist und daß der zahnfreie Bereich (7) der Länge zweier nebeneinander angeordneter Zähne in Umfangsrichtung der Umlenkrolle entspricht.

6. Zahn- und Keilriemeneinrichtung nach Anspruch 1 oder 2, dadurch gekennzeichnet, daß die einander zugeordnete Verzahnung des Zahnriemenbereiches (5) und des Zahnscheibenabschnittes (3) so dimensioniert sind, daß im Betrieb nur eine Flanke jedes Zahnes mit einer Flanke des zugeordneten Zahnes in Eingriff ist.

7. Zahn- und Keilriemeneinrichtung nach Anspruch 1 oder 2, dadurch gekennzeichnet, daß in der Oberfläche des Zahnscheibenabschnittes (3) eine Umfangsnut ausgebildet ist, in welcher die Zähne des Zahnscheibenabschnittes (3) außer Anlage mit dem Zahnriemenbereich (5) sind.

## Claims

1. A toothed-belt and V-belt means for treadmills, comprising at least one endless belt, which is provided with a plurality of tread lamellae (9) and which is guided around two deflection pulleys (10) arranged one behind the other, **characterized in that** at least one of said deflection pulleys (10) comprises a sliding disk member (2) and a toothed disk member (3) in juxtaposition, and that the belt comprises, in juxtaposition, a toothed belt area (5) associated with the toothed disk member (3) of the deflection pulley and a V-belt area (4) abutting on the sliding disk member (2) of the deflection pulley, the main force for driving said belt being adapted to be transmitted via said sliding disk member (2) and said V-belt area (4).

2. A toothed-belt and V-belt means according to claim 1, **characterized in that** one of the deflection pulleys comprises the sliding disk member (2) and the toothed disk member (3), and that the other deflection pulley is formed by a sliding disk, the deflection pulley comprising said sliding disk member and said toothed disk member being adapted to be driven by a driving device.

3. A toothed-belt and V-belt means according to claim 1 or - 2, **characterized in that** the toothed disk member (3) of the deflection pulley includes toothed areas (6) and toothless areas (7), which are alternately and equidistantly arranged throughout the circumferential surface thereof, said toothed areas being defined by a plurality of teeth.

4. A toothed-belt and V-belt means according to claim 2, **characterized in that** the length of a toothless area (7) of the toothed disk member (3) in the circumferential direction of the deflection pulley corresponds to half the length of the toothed area (6) in the circumferential direction of the deflection pulley.

5. A toothed-belt and V-belt means according to claim 2 or 3, **characterized in that** one toothed area (6) comprises four juxtaposed teeth in the circumferential direction, and that the toothless area (7) corresponds to the length of two juxtaposed teeth in the circumferential direction of the deflection pulley.

6. A toothed-belt and V-belt means according to claim 1 or 2, **characterized in that** the associated teeth of the toothed belt area (5) and of the toothed disk member (3) are dimensioned such that, when the system is in operation, only one flank of each tooth is in engagement with one flank of the associated tooth.

7. A toothed-belt and V-belt means according to claim 1 or 2, **characterized in that** the surface of the toothed disk member (3) has formed therein a circumferential groove in which the teeth of the toothed disk member (3) are out of contact with the toothed belt area (5).

## Revendications

1. Système de courroie crantée et trapézoïdale pour tapis roulants, comprenant au moins une courroie sans fin avec une multiplicité de lamelles de marche (9) qui passe sur deux poulies de renvoi (10) disposées l'une derrière l'autre, **caractérisé en ce** qu'au moins l'une des poulies de renvoi (10) comporte, en juxtaposition, un segment de disque de glissement (2) et un segment de disque denté (3), et que la courroie présente, en juxtaposition, une section de courroie crantée (5) associée au segment de disque denté (3) de la poulie de renvoi et une section de courroie trapézoïdale (4) en contact avec le segment de disque de glissement (2) de la poulie de renvoi, la force principale pour l'entraînement de la courroie pouvant être transmise par l'intermédiaire du segment de disque de glissement (2) et de la section de courroie trapézoïdale (4).

2. Système de courroie crantée et trapézoïdale selon la revendication 1, caractérisé en ce que l'une des poulies de renvoi comporte le segment de disque de glissement (2) et le segment de disque denté (3), et que l'autre poulie de renvoi est constituée par un disque de glissement, la poulie de renvoi munie du segment de disque de glissement et du segment de disque denté pouvant être entraînée par un dispositif d'entraînement.

3. Système de courroie crantée et trapézoïdale selon la revendication 1 ou 2, caractérisé en ce que le segment de disque denté (3) de la poulie de renvoi présente alternativement sur sa surface circonférentielle, des sections avec denture (6) et des sections sans denture (7) disposées à des distances égales, les sections dentées étant constituées par une multiplicité de dents.

4. Système de courroie crantée et trapézoïdale selon la revendication 2, caractérisé en ce que la longueur d'une section sans denture (7) du segment de disque denté (3) dans la direction circonférentielle de la poulie de renvoi, correspond à la moitié de la longueur de la section avec denture (6) dans la direction circonférentielle de la poulie de renvoi.

5. Système de courroie crantée et trapézoïdale selon la revendication 2 ou 3, caractérisé en ce qu'une section avec denture (6) dans la direction circonférentielle comporte quatre dents individuelles juxtaposées et que la section sans denture (7) correspond à la longueur de deux dents disposées côte à côte dans la direction circonférentielle de la poulie de renvoi.

6. Système de courroie crantée et trapézoïdale selon la revendication 1 ou 2, caractérisé en ce que les dentures de la section de courroie crantée (5) et du segment de disque denté (3) associées sont dimensionnées de telle façon qu'en fonctionnement, un seul flanc de chaque dent est en prise avec un flanc de la dent associée.

7. Système de courroie crantée et trapézoïdale selon la revendication 1 ou 2, caractérisé en ce que dans la surface du segment de disque denté (3) est ménagée une rainure circonférentielle dans laquelle les dents du segment de disque denté (3) sont dégagées de la section de courroie crantée (5).
